# EUROPEAN PATENT APPLICATION

(11) **EP 3 659 869 A1**
(43) Date of publication of application: **03.06.2020**
(21) Application number: 19205904.6
(22) Date of filing: 29.10.2019
(51) Int. Cl.: B60R 16/027

(54) **WIRING FOR A SLIDE DOOR**

(30) Priority: 30.11.2018 JP 2018225056
(71) Applicant: YAZAKI CORPORATION, Minato-ku, Tokyo 108-8333 (JP)
(72) Inventor: TOMOSADA, Kosuke, Susono-shi, Shizuoka 410-1194 (JP); KOGURE, Naoto, Susono-shi, Shizuoka 410-1194 (JP); SATO, Katsumi, Susono-shi, Shizuoka 410-1194 (JP)
(74) Representative: Grünecker Patent- und Rechtsanwälte PartG mbB

(57) **Abstract**

A wiring structure (10) includes a flexible conductor (1), a flexible regulation member (2) that extends along the conductor (1) and regulates a path of the conductor (1), a flexible exterior member (3) through which the conductor (1) and the regulation member (2) pass, a cover member (6) that has a shape capable of passing through the exterior member (3) and mounted at an end of the regulation member (2), and a holding member (4, 5) that includes a routing groove (41) to route a portion protruding from the exterior member (3) in the conductor (1) and a holding portion (42) to hold the cover member (6).

## Description

### BACKGROUND OF THE INVENTION

### 1. Field of the Invention

The present invention relates to a wiring structure.

### 2. Description of the Related Art

Conventionally, there is known a wire harness which includes a biasing member. Japanese Patent No. 3919174 discloses a power supply device which is structured to prevent an erroneous assembling of a harness biasing member in which a concave portion is provided in one and the other sides of a base end of a plate spring to be deviated in a longitudinal direction, the base end of the plate spring is inserted in a slit portion of a block portion of a protector base in a plate width direction, the concave portion on a side of the plate spring is engaged with a convex portion in the slit portion, and a convex portion of the protector cover is engaged with the concave portion on the other side of the plate spring.

Herein, in a case where a regulation member such as a plate spring and a conductor are assembled and routed, there is a possibility to cause a damage in the conductor when the end of the regulation member and the conductor interfere with each other. If a work is progressed while caring not to cause the interference between the regulation member and the conductor, a workability is lowered.

### SUMMARY OF THE INVENTION

An object of the invention is to provide a wiring structure which can improve a workability of routing work.

In order to achieve the above mentioned object, a wiring structure according to one aspect of the present invention includes a flexible conductor; a flexible regulation member that extends along the conductor and regulates a path of the conductor; a flexible exterior member through which the conductor and the regulation member pass; a cover member that has a shape capable of passing through the exterior member and mounted at an end of the regulation member; and a holding member that includes a routing groove to route a portion protruding from the exterior member in the conductor and a holding portion to hold the cover member.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a perspective view illustrating a wiring structure according to an embodiment;
FIG. 2 is a top view of the wiring structure according to the embodiment;
FIG. 3 is a perspective view of a conductor, a regulation member, an exterior member, and a cover member according to the embodiment;
FIG. 4 is a top view illustrating main parts of the wiring structure according to the embodiment;
FIG. 5 is a perspective view of a first holding member according to a first modification of the embodiment;
FIG. 6 is a cross-sectional view of the first holding member according to the first modification of the embodiment;
FIG. 7 is a cross-sectional view illustrating another example of the first holding member according to the first modification of the embodiment; and
FIG. 8 is a cross-sectional view of the first holding member according to a second modification of the embodiment.

### DETAILED DESCRIPTION OF THE PREFERRED EMBODIMENTS

Hereinbelow, a wiring structure according to an embodiment of the invention will be described in detail with reference to the drawings. Further, the invention is not limited to the embodiment. In addition, components in the following embodiment are substantially equal to those which can be easily conceived by a person skilled in the art.

### Embodiment

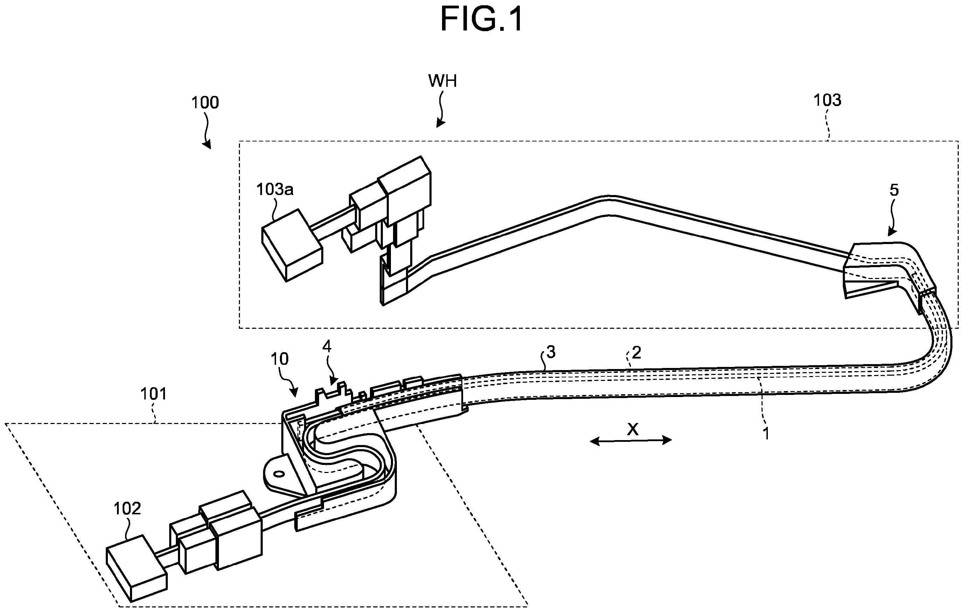

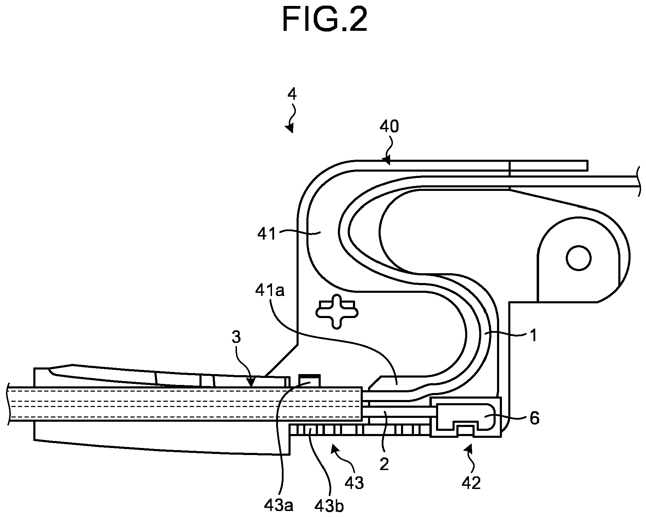

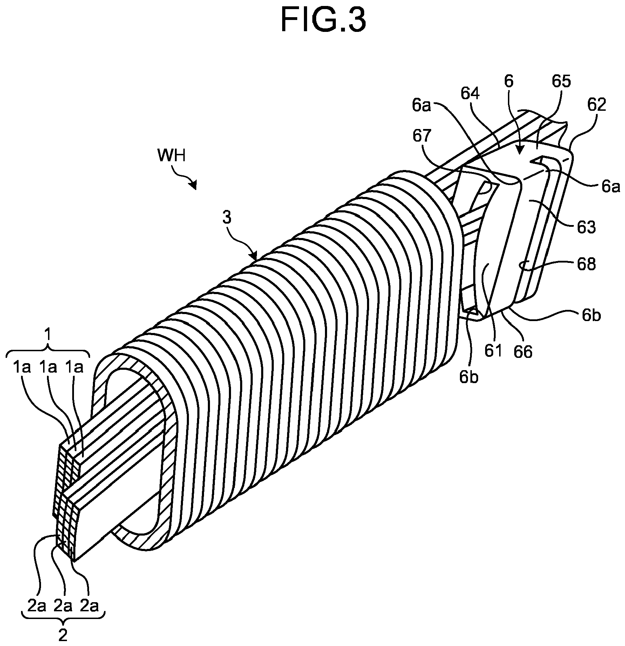

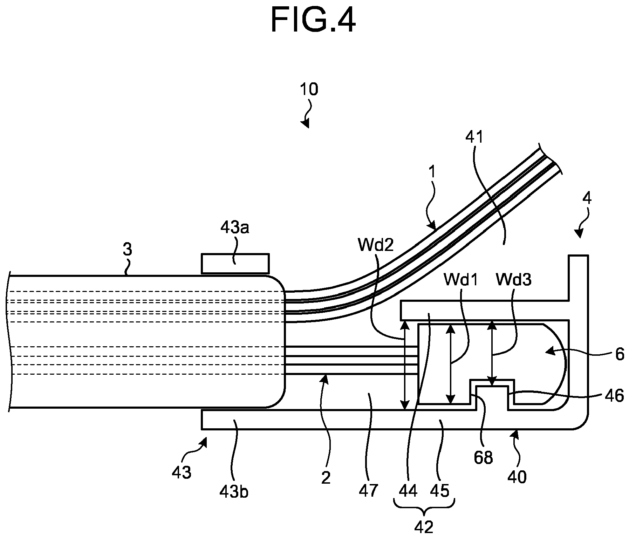

The embodiment will be described with reference to FIGS. 1 to 4. This embodiment relates to the wiring structure. FIG. 1 is a perspective view illustrating the wiring structure according to the embodiment, FIG. 2 is a top view of the wiring structure according to the embodiment, FIG. 3 is a perspective view of a conductor, a regulation member, an exterior member, and a cover member according to the embodiment, and FIG. 4 is a top view illustrating main parts of the wiring structure according to the embodiment.

As illustrated in FIGS. 1 and 2, a wiring structure 10 of this embodiment includes a conductor 1, a regulation member 2, an exterior member 3, a first holding member 4, and a cover member 6. A wire harness WH of this embodiment includes a connector in addition to the wiring structure 10. The conductor 1 is a flexible conductive member which connects a vehicle body 101 of a vehicle 100 and a slide door 103. The shape of the conductor 1 of this embodiment is a plate shape or a belt shape. The conductor 1 of this embodiment includes a plurality of FFCs (Flexible Flat Cable) 1a (see FIG. 3). Each FFC 1a includes a plurality of core wires arranged in parallel and a cladding member which integrally covers the plurality of core wires. Each core wire serves as a power line for supplying power or a signal line. A power source 102 is mounted on the vehicle body 101 of the vehicle 100, and supplies power to the slide door 103. The power source 102 is a secondary battery such as a battery. One end of the conductor 1 is connected to the power source 102 and a control device through a connector.

The slide door 103 is a moving body which is mounted in the vehicle 100, and slides with respect to the vehicle body 101. The slide door 103 relatively moves along a front-back direction X of the vehicle with respect to the vehicle body 101. The slide door 103 is, for example, a motor-driven slide door. The slide door 103 includes a device 103a such as a sensor, a switch, and a motor which operates with power supplied from the power source 102. The other end of the conductor 1 is connected to the device 103a through a connector.

The regulation member 2 is a flexible member which extends along the conductor 1 and regulates a path of the conductor 1. The regulation member 2 has a bending rigidity higher than that of the conductor 1 for example. The regulation member 2 of this embodiment is a member of a plate shape of which the cross-sectional shape is a curved shape. The regulation member 2 is configured by stacking a plurality of metal plates 2a for example (see FIG. 3). Each metal plate 2a is machined such that the cross-sectional shape is formed in a curved shape. The regulation member 2 supports the conductor 1 such that the extending path of the conductor 1 does not come off from a desired path.

The exterior member 3 is a member of a flexible cylindrical shape and, for example, is formed by an insulating synthetic resin. The exterior member 3 of this embodiment is a tube formed in a bellows shape. The exterior member 3 is formed to be freely bent at any place. The cross-sectional shape of the exterior member 3 is, for example, an elliptical shape. As illustrated in FIG. 3, the conductor 1 and the regulation member 2 are inserted in the exterior member 3. The conductor 1 and the regulation member 2 may be inserted in the exterior member 3 together in a state of being overlapped, or may be inserted in the exterior member 3 separately. Both ends of the conductor 1 and the regulation member 2 protrude from the exterior member 3.

The cover member 6 is mounted at the end of the regulation member 2. The shape of the cover member 6 is a shape which can pass through the exterior member 3. The cover member 6 of this embodiment is formed to pass through the exterior member 3 in a state where the conductor 1 passes through the exterior member 3. The cover member 6 is formed by an insulating synthetic resin for example. The cover member 6 covers the end of the regulation member 2 such that the end of the regulation member 2 does not come into contact with the conductor 1 and the inner surface of the exterior member 3. The regulation member 2 is passed through the exterior member 3 in a state where the cover member 6 is mounted at the end.

The cover member 6 is formed almost in a cuboid, and includes a first end surface 61, a second end surface 62, a first side surface 63, a second side surface 64, a third side surface 65, and a fourth side surface 66. The first side surface 63 and the second side surface 64 are side surfaces along a longitudinal direction of the cover member 6. The first side surface 63 and the second side surface 64 are flat surfaces parallel to each other. The cover member 6 is mounted at the regulation member 2 such that the second side surface 64 faces the conductor 1. The third side surface 65 and the fourth side surface 66 are side surfaces along a lateral direction. The third side surface 65 and the fourth side surface 66 are flat surfaces parallel to each other. The first end surface 61 and the second end surface 62 are linked to the side surfaces 63, 64, 65, and 66. The first end surface 61 is a flat surface, and the second end surface 62 is a convex surface.

The cover member 6 includes a concave portion 67 and a groove portion 68. The concave portion 67 is bottomed, and is dented from the first end surface 61 toward the second end surface 62. The cross-sectional shape of the concave portion 67 is a narrow curved shape. The curved shape of the concave portion 67 corresponds to the curved shape of the regulation member 2. The concave portion 67 is formed such that the regulation member 2 can be inserted in the concave portion 67 without deforming the regulation member 2. The concave portion 67 extends along the longitudinal direction of the cover member 6. The concave portion 67 of this embodiment extends from near the third side surface 65 up to near the fourth side surface 66.

The groove portion 68 is formed in the first side surface 63. The groove portion 68 extends along the longitudinal direction of the cover member 6, and both ends are opened to the third side surface 65 and the fourth side surface 66. The cross-sectional shape of the groove portion 68 is, for example, a rectangular shape.

The corner of a tip end of the cover member 6 is formed in a curved shape. Herein, the tip end of the cover member 6 is the second end surface 62. In the cover member 6, the corner formed by the second end surface 62 and the first side surface 63, and the corner formed by the second end surface 62 and the second side surface 64 are formed in a curved shape. With this configuration, it is possible to suppress that the regulation member 2 damages the cladding member of the conductor 1. In addition, since the tip end of the cover member 6 is a curved shape, when the regulation member 2 is inserted in the exterior member 3, it is possible to suppress that the regulation member 2 is stuck in irregularities of the exterior member 3. The regulation member 2 may pass through the exterior member 3 after the conductor 1 passes through the exterior member 3, or may pass through the exterior member 3 before the conductor 1.

In addition, the corner of the cover member 6 at a position facing the exterior member 3 is formed in a curved shape when the cover member 6 is inserted in the exterior member 3. In this embodiment, a corner 6a is formed between the first side surface 63 and the third side surface 65, and a corner 6b is formed between the first side surface 63 and the fourth side surface 66, and are chamfered (herein, a round surface) so as to be formed in a curved shape. With this configuration, when the regulation member 2 is inserted in the exterior member 3, it is suppressed that the cover member 6 is stuck in the irregularities of the exterior member 3. In addition, if the regulation member 2 and the cover member 6 are inserted in a direction opposite to the normal direction with respect to the exterior member 3, and the regulation member 2 and the conductor 1 are inserted in the exterior member 3, the corners 6a and 6b come to a side near the conductor 1, and the corner between the first side surface 64 and the third side surface 65 and the corner between the first side surface 63 and the fourth side surface 66 come to positions to face the exterior member 3. Herein, the corner between the first side surface 64 and the third side surface 65 and the corner between the first side surface 63 and the fourth side surface 66 are different from the corners 6a and 6b, and are not formed in a curved shape. Therefore, when the regulation member 2 is inserted in the exterior member 3, the corners are stuck in the irregularities. In other words, if the regulation member 2 and the cover member 6 are inserted in a direction opposite to the normal direction with respect to the exterior member 3, the corner between the first side surface 64 and the third side surface 65 and the corner between the first side surface 63 and the fourth side surface 66 interfere with the exterior member 3. Therefore, it is possible to suppress that the regulation member 2 is erroneously inserted in the exterior member 3.

The first holding member 4 is a member to be fixed to the vehicle body 101. The first holding member 4 is formed of an insulating synthetic resin for example. The first holding member 4 includes a routing groove 41, a holding portion 42, and a locking portion 43 as illustrated in FIG. 2. The routing groove 41, the holding portion 42, and the locking portion 43 is formed in a main body 40 of almost a rectangular shape.

The routing groove 41 is a concave portion formed in the main body 40, and is bent to form almost an S shape. The holding portion 42 is disposed to be adjacent to the routing groove 41. In the first holding member 4 of this embodiment, the position of the holding portion 42 is one end 41a in the routing groove 41. The holding portion 42 holds the cover member 6. In other words, the holding portion 42 holds the end of the regulation member 2 through the cover member 6.

The locking portion 43 locks the end of the exterior member 3. The locking portion 43 is disposed on an extending line of the routing groove 41. The locking portion 43 locks the exterior member 3 by a pair of walls 43a and 43b facing each other. The walls 43a and 43b includes projections corresponding to the concave portions of the exterior member 3. The projections of the walls 43a and 43b are engaged with the concave portion of the exterior member 3 to lock the exterior member 3.

As illustrated in FIG. 4, the holding portion 42 includes a first wall 44 and a second wall 45. The first wall 44 and the second wall 45 are a pair of walls facing each other. The holding portion 42 supports the cover member 6 by the first wall 44 and the second wall 45. The second wall 45 is a wall which is disposed on the edge of the main body 40, and erected from a bottom wall 47 of the main body 40. The first wall 44 is a wall which extends along the routing groove 41, and erected from the bottom wall 47. The first wall 44 and the second wall 45 are in parallel to each other.

The second wall 45 includes a convex portion 46. The convex portion 46 protrudes toward the first wall 44. The convex portion 46 extends along a height direction Z. The height direction Z is a protruding direction in which the first wall 44 and the second wall 45 protrude from the bottom wall 47. The height direction Z is a vertical direction of the vehicle 100.

As illustrated in FIG. 4, the cross-sectional shape of the convex portion 46 corresponds to the cross-sectional shape of the groove portion 68. The cross-sectional shape of the convex portion 46 of this embodiment is a rectangular shape. A dimension of the convex portion 46 is set to be a value to be inserted in the groove portion 68. The cover member 6 is plugged between the first wall 44 and the second wall 45 along the height direction Z. At this time, the convex portion 46 is inserted in the groove portion 68. In other words, the cover member 6 is guided along the height direction Z by the convex portion 46.

A width Wd1 of the cover member 6 is smaller than a gap Wd2 between the first wall 44 and the second wall 45. In addition, the width Wd1 of the cover member 6 is larger than a gap Wd3 between the tip end of the convex portion 46 and the first wall 44. Therefore, the cover member 6 is configured not to be plugged between the first wall 44 and the second wall 45 as long as the convex portion 46 is not inserted in the groove portion 68. With this configuration, an erroneous assembly of the cover member 6 with respect to the holding portion 42 is regulated. For example, the cover member 6 is not possible to be assembled to the holding portion 42 in a posture that the groove portion 68 faces the first wall 44. Therefore, it is possible to notify a worker that the assembly is made in a wrong direction.

In addition, the convex portion 46 and the groove portion 68 also serve as a retainer of the cover member 6. The convex portion 46 is engaged with the groove portion 68, and locks the cover member 6. The convex portion 46 regulates the movement of the cover member 6 along an axial direction of the regulation member 2, and regulates the cover member 6 not to be pulled out of the holding portion 42.

A second holding member 5 is a member to be fixed to the slide door 103. The second holding member 5 is formed of an insulating synthetic resin for example. Further, in the wiring structure 10 of this embodiment, a holding portion similar to the holding portion 42 is provided even in the second holding member 5. In addition, the second holding member 5 includes a routing groove where the conductor 1 is routed, and a locking portion which locks the exterior member. The cover member 6 is mounted at each of both ends of the regulation member 2. One cover member 6 is held by the holding portion 42 of the first holding member 4, and the other cover member 6 is held by the holding portion of the second holding member 5.

As described above, the wiring structure 10 of this embodiment includes the conductor 1, the regulation member 2, the exterior member 3, the cover member 6, and the first holding member 4. The conductor 1 is flexible. The regulation member 2 is a flexible member which extends along the conductor 1 and regulates a path of the conductor 1. The exterior member 3 is a flexible member through which the conductor 1 and the regulation member 2 pass.

The cover member 6 is a member which is formed in a shape to pass through the exterior member 3, and mounted at the end of the regulation member 2. The first holding member 4 includes the routing groove 41 and the holding portion 42. The routing groove 41 is a groove portion where a portion protruding from the exterior member 3 in the conductor 1 is routed. The holding portion 42 holds the cover member 6. According to the wiring structure 10 of this embodiment, the cover member 6 is mounted at the end of the regulation member 2, so that it is suppressed that the regulation member 2 damages the conductor 1. Therefore, the wiring structure 10 of this embodiment can improve a workability in routing work.

The holding portions 42 of this embodiment include a pair of walls (the first wall 44 and the second wall 45) which face each other and hold the cover member 6. The second wall 45 in the pair of walls 44 and 45 includes the convex portion 46. The convex portion 46 protrudes toward the first wall 44 in the pair of walls 44 and 45. The regulation member 2 is formed in a plate shape of which the cross-sectional shape is a curved shape. The cover member 6 includes the concave portion 67 and the groove portion 68. The concave portion 67 is formed in a shape corresponding to the curved shape of the regulation member 2, and is a portion into which the end of the regulation member 2 is inserted. The convex portion 46 of the holding portion 42 is inserted in the groove portion 68. Therefore, the wiring structure 10 of this embodiment can regulate the erroneous assembling of the cover member 6 with respect to the first holding member 4.

### First Modification of Embodiment

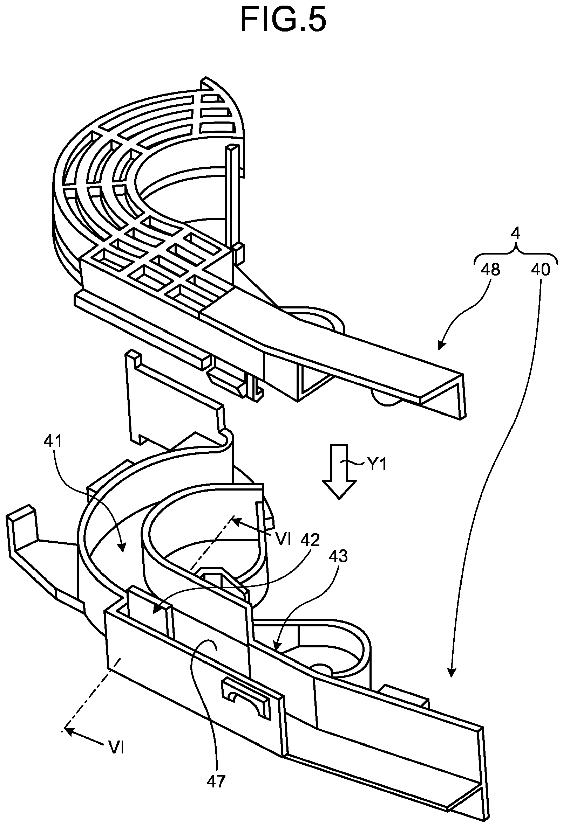

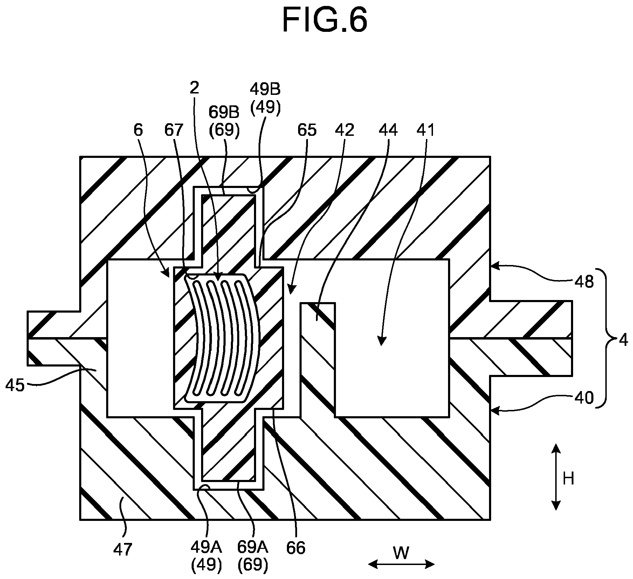

A first modification of the embodiment will be described. FIG. 5 is a perspective view of the first holding member according to the first modification of the embodiment, and FIG. 6 is a cross-sectional view of the first holding member according to the first modification of the embodiment. The first modification of the embodiment is different from the above embodiment in that the cover member 6 is engaged with a concave portion 49 of the first holding member 4.

As illustrated in FIG. 5, the first holding member 4 of this modification includes the main body 40 and a lid portion 48. The lid portion 48 is attached to the main body 40 to form a housing together with the main body 40. The main body 40 and the lid portion 48 according to the first modification are formed almost in a J shape in a plan view. The main body 40 includes the routing groove 41, the holding portion 42, and the locking portion 43.

The lid portion 48 is attached to the main body 40 as illustrated with arrow Y1 in FIG. 5. The lid portion 48 is attached to the main body 40, covers the routing groove 41, the holding portion 42, and the locking portion 43, and forms a space together with the main body 40. The conductor 1 and the regulation member 2 are routed in the space surrounded by the main body 40 and the lid portion 48.

FIG. 6 illustrates a cross section of the first holding member 4 in a state where the cover member 6 is held by the holding portion 42 and the lid portion 48 is attached to the main body 40. As illustrated in FIG. 6, the main body 40 and the lid portion 48 include the concave portion 49 which is dented along a width direction H of the regulation member 2. The width direction H of the regulation member 2 is a vertical direction of the vehicle for example. The concave portion 49 includes a first concave portion 49A formed in the main body 40 and a second concave portion 49B formed in the lid portion 48. The first concave portion 49A is formed in a surface facing the lid portion 48 in the bottom wall 47 of the main body 40. The first concave portion 49A is disposed between the first wall 44 and the second wall 45, and dented in a direction away from the lid portion 48.

The second concave portion 49B is formed in a surface facing the main body 40 in the lid portion 48. The second concave portion 49B is disposed at a position facing the first concave portion 49A. The cross-sectional shapes of the first concave portion 49A and the second concave portion 49B in the cross section perpendicular to the regulation member 2 are a rectangular shape. The width of the first concave portion 49A and the width of the second concave portion 49B may be equal in the cross section perpendicular to the regulation member 2. In addition, the depth of the first concave portion 49A and the depth of the second concave portion 49B may be equal in the cross section perpendicular to the regulation member 2.

The cover member 6 includes a convex portion 69. The convex portion 69 includes a first convex portion 69A and a second convex portion 69B. The first convex portion 69A is a convex portion which is engaged with the first concave portion 49A. The shape of the first convex portion 69A is formed to be engaged with the first concave portion 49A. The second convex portion 69B is a convex portion which is engaged with the second concave portion 49B. The shape of the second convex portion 69B is formed to be engaged with the second concave portion 49B. The first convex portion 69A protrudes from the fourth side surface 66, and the second convex portion 69B protrudes from the third side surface 65. In other words, the first convex portion 69A and the second convex portion 69B protrude in a reverse direction to each other.

In the cross section perpendicular to the regulation member 2, the width of the first convex portion 69A is equal to or slightly smaller than the width of the first concave portion 49A. In the cross section perpendicular to the regulation member 2, the width of the second convex portion 69B is equal to or slightly smaller than the width of the second concave portion 49B. The width of the first convex portion 69A and the width of the second convex portion 69B may be equal in the cross section perpendicular to the regulation member 2. In the cross section perpendicular to the regulation member 2, the protruding length of the first convex portion 69A is equal to or slightly smaller than the depth of the first concave portion 49A. In the cross section perpendicular to the regulation member 2, the protruding length of the second convex portion 69B is equal to or slightly smaller than the depth of the second concave portion 49B. The protruding length of the first convex portion 69A and the protruding length of the second convex portion 69B may be equal.

The cover member 6 makes the first convex portion 69A engaged with the first concave portion 49A to be attached to the main body 40. When the lid portion 48 is attached to the main body 40, the second convex portion 69B of the cover member 6 is engaged with the second concave portion 49B of the lid portion 48. With this configuration, the cover member 6 is locked and held by the main body 40 and the lid portion 48. The first concave portion 49A and the second concave portion 49B regulate the movement of the cover member 6 in a horizontal direction W for example. The first concave portion 49A and the second concave portion 49B may regulate the movement of the cover member 6 in the longitudinal direction of the regulation member 2.

Further, the concave portion 49 may be disposed on any one of the main body 40 and the lid portion 48. For example, only the first concave portion 49A in the first concave portion 49A and the second concave portion 49B may be provided. In this case, the first convex portion 69A is provided in the cover member 6, and the second convex portion 69B is not provided. In other words, the convex portion 69 provided in the cover member 6 is one. In this way, the concave portion 49 and the convex portion 69 are provided one by one, so that an erroneous assembling of the cover member 6 can be regulated.

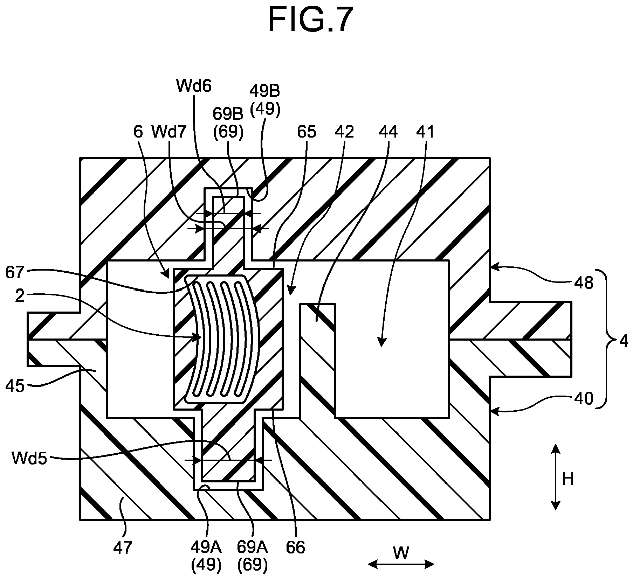

In a case where the concave portion 49 and the convex portion 69 are provided two by two, the concave portion 49 and the convex portion 69 may be configured in order to regulate an erroneous assembling. For example, as illustrated in FIG. 7, a width Wd7 of the second concave portion 49B may be narrower than a width Wd5 of the first convex portion 69A. In this case, a width Wd6 of the second convex portion 69B becomes narrower than the width Wd7 of the second concave portion 49B. In the case of such a configuration, the first convex portion 69A is not possible to be engaged with the second concave portion 49B. Therefore, an erroneous assembling of the cover member 6 is regulated. Further, on the contrast to the configuration illustrated in FIG. 7, the second convex portion 69B may be not possible to be engaged with the first concave portion 49A.

The second holding member 5 may include a concave portion similar to the concave portion 49 of the first holding member 4. In this case, the cover member 6 held by the second holding member 5 includes a convex portion similar to the convex portion 69 of the cover member 6 which is held by the first holding member 4.

### Second Modification of Embodiment

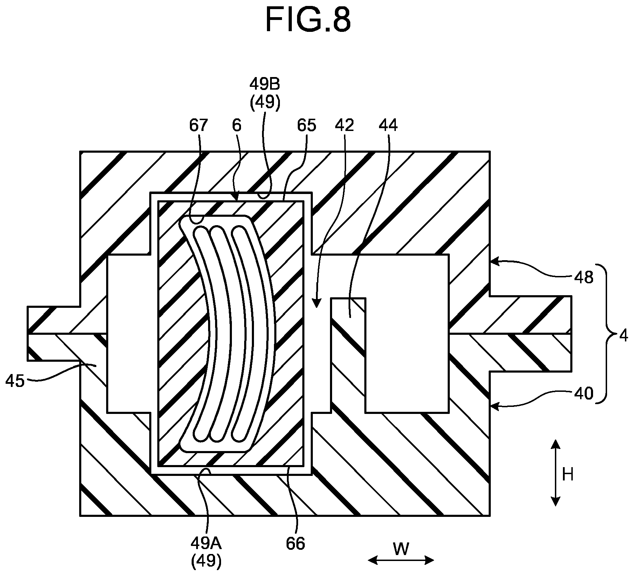

A second modification of the embodiment will be described. FIG. 8 is a cross-sectional view of the first holding member according to the second modification of the embodiment. The second modification of the embodiment is different from the first modification of the above embodiment in that, for example, the cover member 6 does not include the convex portion 69.

As illustrated in FIG. 8, the first holding member 4 includes the main body 40 and the lid portion 48. The main body 40 includes the first concave portion 49A, and the lid portion 48 includes the second concave portion 49B. The end on a side near the fourth side surface 66 in the cover member 6 is engaged with the first concave portion 49A to be held by the main body 40. The end on a side near the third side surface 65 in the cover member 6 is engaged with the second concave portion 49B, and is held by the lid portion 48. According to the configuration of the second modification, the convex portion 69 is not necessary, and the volume of the cover member 6 becomes small. Therefore, the first holding member 4 can be made low in height.

The second holding member 5 may include a concave portion similar to the concave portion 49 of the first holding member 4. In this case, the cover member 6 held by the second holding member 5 is engaged with the concave portion of the second holding member 5 to be held by the second holding member 5.

### Third Modification of Embodiment

A third modification of the embodiment will be described. The conductor 1 is not limited to the FFC illustrated as an example. As the conductor 1, a round wire, a flat wire, or other wires may be used. The shape of the regulation member 2 is not limited to the shape illustrated in the embodiment. The regulation member 2 may be a plate member of which the cross-sectional shape is rectangular. The wire harness WH may be used for connecting a sliding seat and the vehicle body 101.

The shape of the convex portion 46 and the shape of the groove portion 68 are not limited to the shape illustrated in the embodiment. For example, the cross-sectional shapes of the convex portion 46 and the groove portion 68 may be triangular.

The contents disclosed in the embodiment and the modifications may be put into practice by combination in an appropriate manner.

A wiring structure according to the embodiment includes a flexible conductor, a flexible regulation member which extends along the conductor and regulates a path of the conductor, a flexible exterior member through which the conductor and the regulation member pass, a cover member which is formed to pass through the exterior member and mounted at an end of the regulation member, and a holding member which includes a routing groove to route a portion protruding from the exterior member in the conductor and a holding portion to hold the cover member. The cover member suppresses that the conductor comes into contact with the regulation member to cause a damage. Therefore, according to the wiring structure of the embodiment, a workability of routing work can be improved.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A wiring structure (10), comprising:
a flexible conductor (1);
a flexible regulation member (2) that extends along the conductor (1) and regulates a path of the conductor (1) ;
a flexible exterior member (3) through which the conductor (1) and the regulation member (2) pass;
a cover member (6) that has a shape capable of passing through the exterior member (3) and mounted at an end of the regulation member (2); and
a holding member (4, 5) that includes a routing groove (41) to route a portion protruding from the exterior member (3) in the conductor (1) and a holding portion (42) to hold the cover member (6).

2. The wiring structure (10) according to claim 1, wherein
the holding portion (42) includes a pair of walls (44, 45) that face each other and hold the cover member (6),
one (45) of the pair of walls (44, 45) includes a convex portion (46) protruding toward another one (44) of the pair of walls (44, 45),
the regulation member (2) is formed in a plate shape of which a cross-sectional shape is a curved shape, and
the cover member (6) is formed in a shape corresponding to the curved shape of the regulation member (2), and includes a concave portion (67) in which the end of the regulation member (2) is inserted and a groove portion (68) in which the convex portion (46) is inserted.

3. The wiring structure (10) according to claim 1 or 2, wherein
the holding member (4) includes
a main body (40) that includes the routing groove (41) and the holding portion (42), and
a lid portion (48) that is attached to the main body (40) to form a housing together with the main body (40),
at least one of the main body (40) and the lid portion (48) includes a concave portion (49) that is dented along a width direction of the regulation member (2), and
the cover member includes a convex portion (69) that is engaged with the concave portion (49).

4. The wiring structure (10) according to claim 3, wherein
the concave portion (49) is disposed on any one of the main body (40) and the lid portion (48), and
the convex portion (69) is provided by one.

5. The wiring structure (10) according to claim 3, wherein
the concave portion (49) includes a first concave portion (49A) formed in the main body (40) and a second concave portion (49B) formed in the lid portion (48),
the convex portion (69) includes a first convex portion engaged (69A) with the first concave portion (49A) and a second convex portion (69B) engaged with the second concave portion (49B), and
the first convex portion (69A) is not possible to be engaged with the second concave portion (49B) or the second convex portion (69B) is not possible to be engaged with the first concave portion (49A).

6. The wiring structure (10) according to claim 1 or 2, wherein
the holding member (4) includes
a main body (40) that includes the routing groove (41) and the holding portion (42), and
a lid portion (48) that is attached to the main body (40) to form a housing together with the main body (40), and
at least one of the main body (40) and the lid portion (48) includes a concave portion (49) to hold the cover member (6).
